# EUROPEAN PATENT APPLICATION

(11) **EP 1 331 604 A1**
(43) Date of publication of application: **30.07.2003**
(21) Application number: 02090030.4
(22) Date of filing: 22.01.2002
(51) Int. Cl.: G06T 1/60, H04N 7/50

(54) **Method and device for memory access of block encoders/decoders**

(71) Applicant: DEUTSCHE THOMSON-BRANDT GMBH, 78048 Villingen-Schwenningen (DE)
(72) Inventor: Gaedke, Klaus, 30659 Hannover (DE)
(74) Representative: Schäferjohann, Volker Willi, Dipl.-Phys.

(57) **Abstract**

A data rate for SDRAM memory accesses of a MPEG2 encoder/decoder shall be increased and the implementation of a MPEG-2 encoder/decoder shall be simplified. Therefore, there is provided a method of storing data of picture elements in a memory device (2) being organized in the form of a matrix, by providing the data in the form of data blocks (1) for storing and storing the data blocks (1) in block lines in said memory device (2).

## Description

### BACKGROUND

The present invention relates to a device and method of storing data of picture elements in a memory device being organized in the form of a matrix, wherein the data are provided in the form of data blocks for storing. Particularly, the present invention relates to memory accesses to MPEG-2 decoders and encoders.

For each predictive frame, a MPEG-2 encoder/decoder generates a reference frame, e.g. of the size 720 x 576 pel (picture element) for PAL based applications or 720 x 480 pel for NTSC based applications. This reference frame is used for two purposes:
a) The motion estimator of the MPEG-2 encoder uses this frame as reference for the detection of the motion of the macro blocks of the current frame. With other words, the search areas for the motion estimation consist of data from the reference frame.
b) The predicted frame of the MPEG-2 decoder is build on the basis of determined motion vectors and the content of the reference frame.

Due to its size, the reference frame is stored in a dynamic RAM. Typically, for consumer applications a Synchronous Dynamic Random Access Memory (SDRAM) is used, because of its low cost, high data rate and designer-friendly synchronous interface. SDRAMs are organized in banks, pages and memory words. 16 Mbit SDRAMs are available, for example, with 2 banks of 2048 pages each. The pages can be organized either as 1024 words of 4 bit, 512 words of 8 bit or 256 words of 16 bit.

The random access time to data inside a selected page is typically less than 10 ns for today's 16 Mbit SDRAMs. Therefore, SDRAMs provide a very high data rate for a series of accesses to data located in the same page. On the other hand, random accesses to data located in different pages results in a lower available data rate, because each change of a page requires several commands and delay times for the SDRAM.

### INVENTION

It is the object of the present invention to increase the data rate for memory accesses of a MPEG-2 encoder/decoder and to simplify a memory interface of the MPEG-2 encoder/decoder.

According to the present invention this object is solved by a method of storing data of picture elements in a memory device being organized in the form of a matrix, by providing said data in the form of data blocks for storing, and storing said data blocks in block lines, each capable of storing a series of data blocks, in said memory device.

Furthermore, the above mentioned object is solved by a device for storing data of picture elements being organized in the form of a matrix, said data being provided in the form of data blocks, wherein said data blocks are storable in block lines each capable of storing a series of data blocks.

The general idea of the disclosed invention is an organization of the reference frame inside the SDRAM, so that
a) the available data rate for access to the reference frame for reading of the search areas for motion estimation and reading of reference macro blocks for the generation of the predicted frame is increased through the reduction of page-breaks,
b) and the accesses to the reference frame SDRAM to build the predicted frame do not require a logic to detect a page break. Thus, the implementation of the SDRAM interface is simplified, because a page-break detection logic is not necessary.

The present invention will now be described in more detail in connection with the attached drawings showing in:

### DRAWINGS

- Fig. 1: the blocks of an YUV macro block according to MPEG 2 video standard;
- Fig. 2: the partition of a video picture in macro blocks;
- Fig. 3: a block-to-line conversion of macro blocks of the reference frame;
- Fig. 4: a block diagram for utilization of two SDRAMs to extent the page size;
- Fig. 5: a principle diagram concerning the page-break reduction based on a small internal buffer memory for several reference frame macro blocks;
- Fig. 6: a diagram showing the organization of the complete reference frame for PAL applications in the format 4 : 2 : 0, 720 x 576 pel luminance, 2 x 360 x 288 pel chrominance;
- Fig. 7: a principle diagram as to the reading of a search area inside the reference frame for motion estimation; and
- Fig. 8: a principle diagram as to the reading of a predicted area inside the reference frame.

### EXEMPLARY EMBODIMENTS

In the following, an address scheme for the storage of reference frames generated by MPEG-2 encoders/decoders in SDRAMs will be described. This address scheme allows an exchange of reference data between MPEG-2 encoder/decoder and SDRAM with very regular accesses and high data rates.

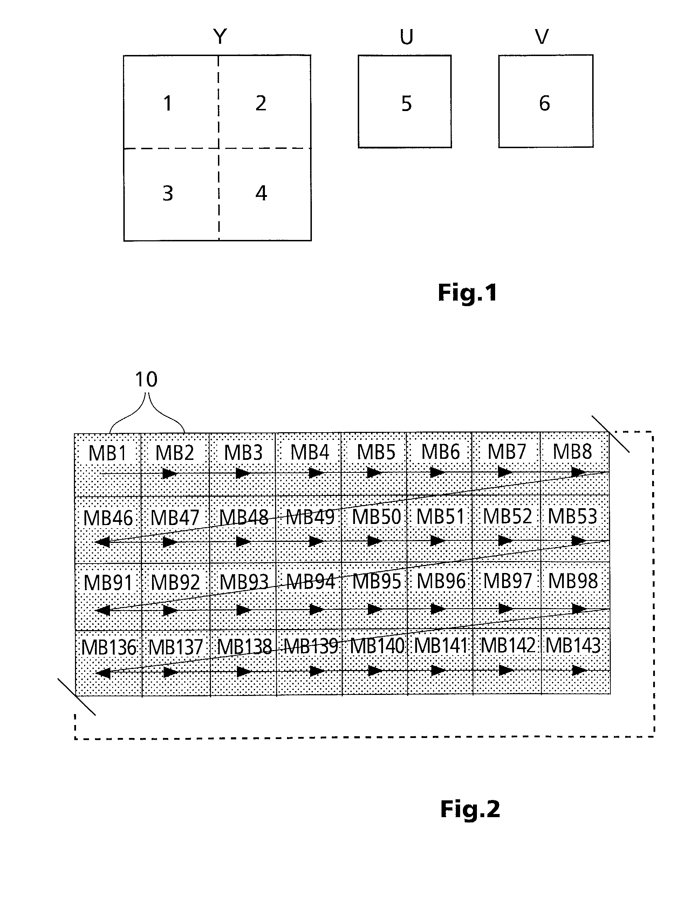

A YUV macro block as defined in the MPEG2 video standard is shown in Fig. 1. Such a YUV macro block consists of a 16 x 16 pixel luminance block Y and one 8 x 8 pixel block of chrominance data U and one 8 x 8 pixel block of chrominance data V. According to the MPEG2 video standard the Y macro block is subdivided in four 8 x 8 blocks of luminance data. The luminance/chrominance value of a pixel is in each case represented by an 8 bit word (Byte). The read out order of the blocks of the YUV macro block for DCT or inverse DCT processing is indicated by the numbers in Fig. 1. The chrominance data is only half of the luminance data. This is due to the fact that the human eye is less sensitive to color differences in a picture than to luminance differences. The samples of each chrominance signal when being sampled with the same sampling rate as the luminance signal are each decimated by a factor of 4, i.e. in horizontal and vertical direction only every other sample is taken.

Fig.2 shows how a video picture is partitioned in YUV macro blocks. For a 720 * 576 pixel PAL picture there are 36 rows of 45 macro blocks each, in total 1620 YUV macro blocks. For a 720 * 480 pixel NTSC picture there are 30 rows of 45 macro blocks each, in total 1350 YUV macro blocks.

As known from the MPEG2 standard the MPEG-2 encoder not only generates intra encoded frames (I-frames) but also it generates unidirectional encoded frames (P-frames) and bidirectional encoded frames (B-frames). Correspondingly the MPEG2 decoder has to decode I-, P- and B-frames as well. For the inter-encoded frames of the P or B type one respectively two reference frames are required to make the prediction which area of a preceding or following picture gives the best match with a current macro block. The whole block matching process for motion estimation is complex and it is not repeated in this application in order not to overload the application. For reference it is referred to the MPEG2 video standard (ISO/IEC 13818-2) itself and to EP-B-0 778 698 which is a European patent of the applicant in which the motion estimation process is explained in detail.

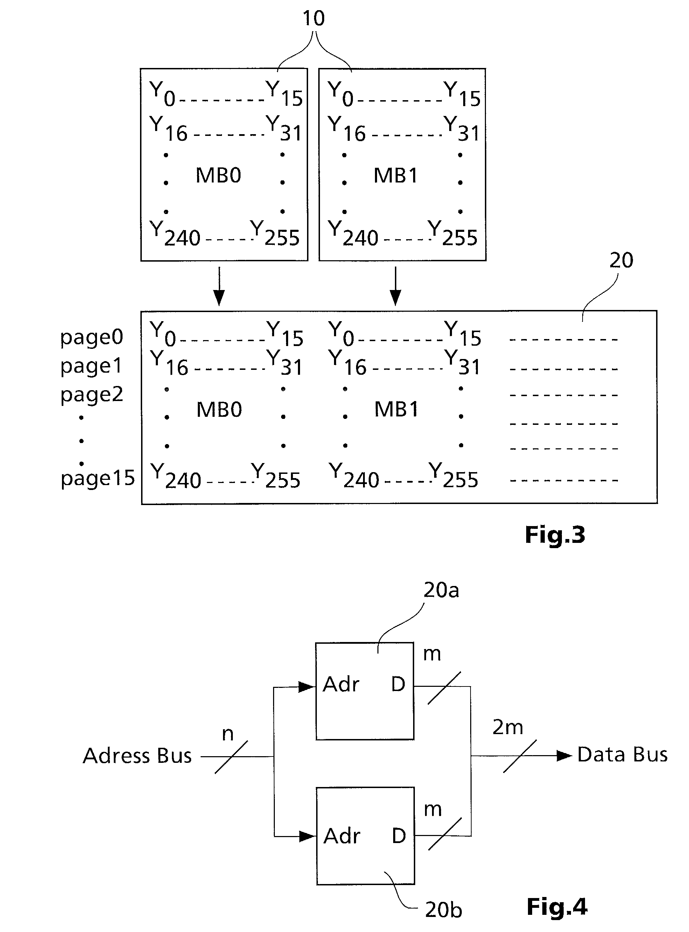

A current frame is subdivided in YUV macro blocks as explained above and so are the reference frames. The invention is related to a very efficient memory organization for storing a reference frame. The most important step to achieve the proposed memory organization is a block-to-line conversion of luminance and chrominance pels for each macro block, wherein the macro blocks are strung together to form a block line. Fig. 3 shows this for the luminance macro blocks 10. Each line of a macro block 10 is written to a corresponding page of the SDRAM 20. Fig. 3 shows how the luminance data of the first row of macro blocks of the reference frame is arranged in the SDRAM 20. Of course there are more pages for the remaining rows of macro blocks. In case of a PAL frame 576 pages are required having a size of 720 bytes each only for the luminance data. At the end of the storage of a frame, each page of the SDRAM 2 holds one complete line of the reference frame.

If the page size of the SDRAM 2 is too small to store one complete line of the frame, multiple SDRAMs 20a, 20b should be used to store several pels at the same address Adr D of a page (see Fig. 4). An example for this situation is the usage of two 16 Mbit SDRAMs 20a, 20b with a page size of 256 words of 16 bit. Due to the utilization of two devices, the final page size is 256 words of 32 bit, which is equal to 1024 byte. Therefore, a complete line of a PAL or NTSC frame (720 byte) can be stored within one page. In two identical pages of the two SDRAMs 20a, 20b one half of a video line is stored.

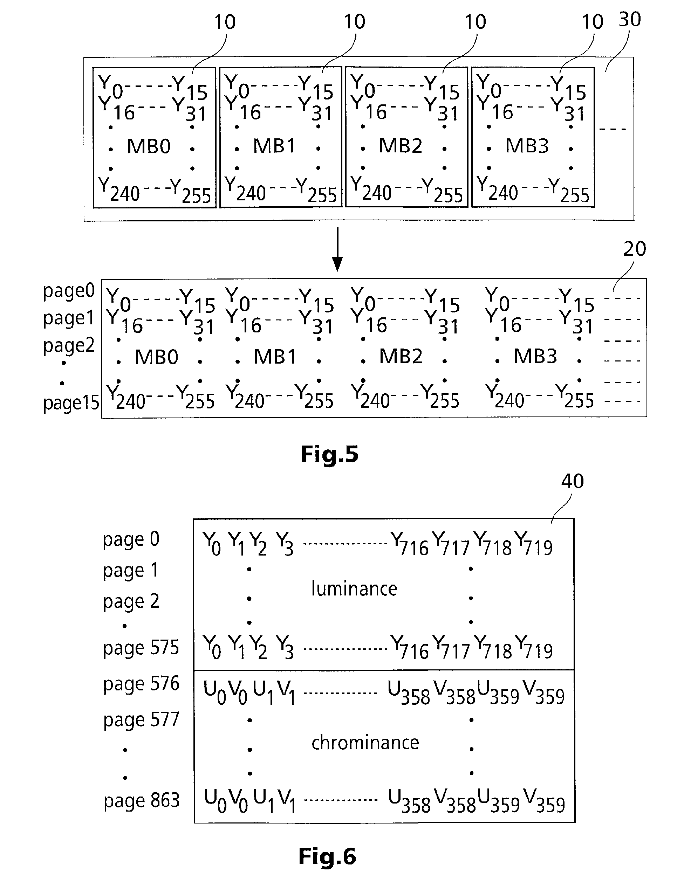

The disadvantage of this simple block-to-line conversion in which each single macro block is separately converted for writing in the SDRAM is the number of page breaks per macro block, which is equal to the number of stored macro block lines. Adding a small on-chip buffer memory 30 for n luminance macro blocks 10 (n is a natural number, and will be in a preferred embodiment the number of macro blocks in a macro block row of the picture), the number of page-breaks for the storage of the reference frame can be reduced significantly (see Fig. 5). Before the macro block data is written to the frame memory, n macro blocks are collected in the small on-chip buffer 30. When writing the content of the buffer memory 30 to the SDRAM, the number of page breaks is still equal to the number of macro block lines, but the number of page-breaks per macro block has been reduced by the factor n, since a complete macro block line is transferred to the SDRAM 20 or to the SDRAMs 20a, 20b in one shot making it unnecessary to make a page change.

Under the assumption, that the horizontal resolution of the chrominance pels is only the half of the luminance pels (4:2:0 format), a second possible enhancement is the combination of two chrominance pels to form one 16 bit word. Then, the length of the chrominance lines is equal to the length of the luminance lines.

Fig. 6 shows the final organization of the reference frame 40 stored in the SDRAM 20 after block-to-line conversion for PAL video pictures in 4:2:0 format (720 x 576 pel luminance, 2 x 360 x 288 pel chrominance). Taking the example of using two 16 Mbit SDRAMs having a page size of 256 words a 16 bit, a full PAL frame with luminance and chrominance data will occupy 864 pages. As the 16 Mbit SDRAMs provide two banks of 2048 pages each, this arrangement provides memory capacity of two reference frames in each bank.

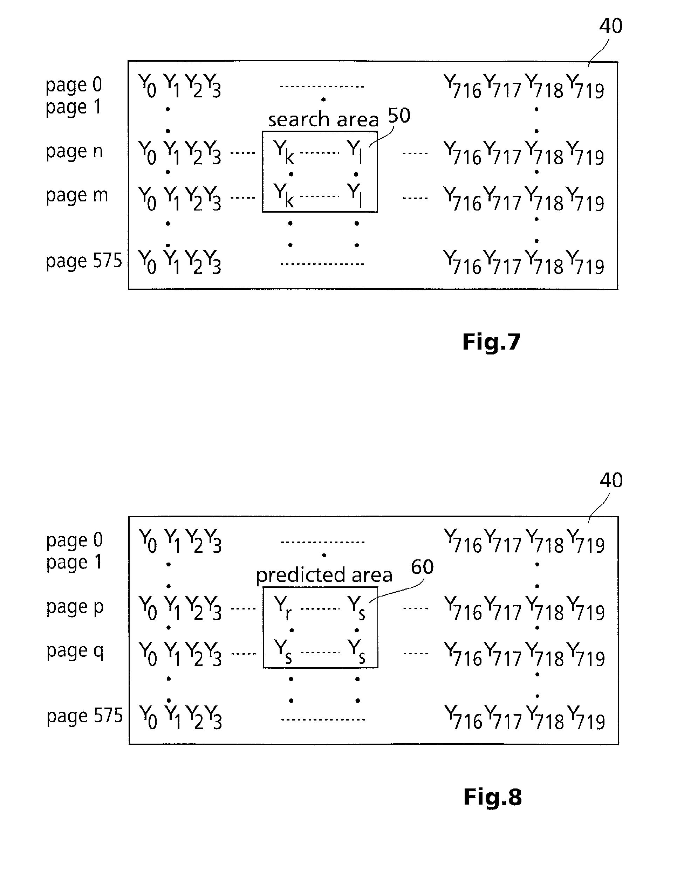

Due to the described line-oriented storage of the reference frame 40, all read accesses to the reference frame 40 can be implemented with high data rate and without silicon-consuming page-break detection logic. The access scheme for the motion estimator to read-in a search area consisting of a plurality of macro blocks is shown in Fig. 7. All lines of the search area 50 can be read-in in one shot without a page-change. Therefore, the total number of page-changes during the reading of a search area 50 is reduced to the number of lines of the search area 50.

The access scheme for the reading of the predicted area having roughly the size of one macro block is shown in Fig. 8. It has to be noted, that this access can be of the type 16x16 pel, 16x17 pel, 17x16 pel or 17x17, according to the motion vector. The types 16x17, 17x16 or 17x17 pel result from the half-pel accuracy of the motion vector either in x-, y-, or x- and y-direction. Nevertheless, for all types of read accesses the page change always occurs before the first access to a line of the predicted area 60. All accesses inside the line of a predicted area 60 are within the same page. This simplifies the implementation of the SDRAM interface.

Thus, the present invention increases the data rate or bandwidth for SDRAM accesses of a MPEG-2 encoder/decoder through a reduction of page-changes for accesses to the reference frame 40. Furthermore, the implementation of the SDRAM interface of MPEG-2 encoders is simplified.

The invention is applicable for all block-based video encoders/decoders, e.g. MPEG-1, MPEG-2, MPEG-4, H.261, H.263.

In an alternative embodiment the blocks of a complete column of the video picture are collected in the buffer 30 and they are written in the memory column by column thus storing the data of one complete pixel column in a given memory page. In this way for storing an NTSC video page with 720 x 480 pixels only one 16 Mbit SDRAM is required because a memory page offers the capacity of 256 x 16 bit words which is enough to store the data of a complete pixel column.

## Claims

1. Method of writing video picture data into a memory device (20) said memory device (20) being organised in pages that are separately addressable, wherein the video picture data is provided in the form of pixel data blocks (10) consisting of a number of pixel lines or pixel columns, **characterized by** writing said pixel data blocks (10) line-wise or column-wise into said memory device (20), so that the pixel lines or columns of a pixel data block are stored in different ones of pages of the memory device (20).

2. Method according to claim 1, wherein the pixel data blocks (10) are in the form of macro-blocks of the MPEG2 video standard.

3. Method according to claim 1 or 2, wherein the pixel data blocks (10) include a luminance data block for 16 x 16 picture elements and/or one or more chrominance data blocks for 8 x 8 picture elements.

4. Method according to one of claims 1 to 3, wherein two or more memory devices (20a, 20b) organised in pages of a given length are combined to provide a memory device having a correspondingly longer page length to allow storage of the pixel data of one complete video line or column in one page of the combined memory device.

5. Method according to one of claims 1 to 4, wherein several pixel data blocks (10) are collected in a buffer memory (30) and after that, the collected pixel data blocks (10) are written in the memory device (20) in the manner that the first lines or columns of all the collected pixel data blocks are written collectively in the same memory page and the further lines or columns of the pixel data blocks (10) are written collectively in corresponding memory pages.

6. Method according to one of the claims 1 to 5, wherein a number of chrominance data blocks of the first type are combined with the number of chrominance data blocks of the second type to get the same line or column length of chrominance data as for the luminance data.

7. Method of reading video picture data from a memory device (20) being organized in pages that are separately addressable, wherein the video picture data is provided in the form of pixel data blocks (10) consisting of a number of pixel lines or pixel columns, **characterized in that** for reading out a pixel data block the memory (20) is addressed page by page and from each page the pixel data of a line or column of the pixel data block is read out.

8. Method according to claim 7, wherein for reading out an array of pixel data blocks the memory (20) is addressed page by page and from each page the pixel data of a complete line or column of the pixel data block array is read out.

9. Memory device for storing video picture data, the video picture data is provided in the form of pixel data blocks (10) consisting of a number of pixel lines or pixel columns, wherein the memory device is organised in a number of pages, **characterized in that** said pixel data blocks are storable in block lines or columns, where each block line or column is storable in a different memory page.

10. Memory device according to claim 9, further including a buffer memory (30) for buffering several pixel data blocks, wherein the collected pixel data blocks (10) are transferable in the memory device (20) in the manner that the first lines or columns of all the collected pixel data blocks (10) are written collectively in the same memory page and the further lines or columns of the pixel data blocks (10) are written collectively in corresponding memory pages.

11. Memory device according to claim 10, wherein the buffer memory (30) provides as much memory capacity as required for storing the pixel data blocks of a complete block line or block column of the video picture.
